Europäisches Patentamt

European Patent Office

Office européen des brevets

(19)

(11) Numéro de publication: **0 014 296**
**B1**

(12) **FASCICULE DE BREVET EUROPEEN**

(45) Date de publication du fascicule du brevet: **12.05.82**

(51) Int. Cl.³: **C 01 G  43/00, C 22 B  60/02**

(21) Numéro de dépôt: **79400918.3**

(22) Date de dépôt: **27.11.79**

(54) **Uranate de sodium sous forme de particules sphériques ayant une bonne coulabilité et son procédé d'obtention.**

(30) Priorité: **08.12.78 FR  7834581**

(43) Date de publication de la demande:
**20.08.80 Bulletin 80/17**

(45) Mention de la délivrance du brevet:
**12.05.82 Bulletin 82/19**

(84) Etats contractants désignés:
**DE FR GB IT SE**

(56) Documents cités:
**FR - A - 1 187 352**
**FR - A - 1 210 377**

(73) Titulaire: **P C U K  PRODUITS CHIMIQUES UGINE KUHLMANN**
**Service Propriété Industrielle Tour Manhattan**
**F-92087 Paris La Defense 2 Cédex 21 (FR)**

(72) Inventeur: **Dugua, Jacques**
**Les Essarts**
**Charly F-69390 Vernaison (FR)**

(74) Mandataire: **Dorland, Anne-Marie**
**PRODUITS CHIMIQUES UGINE KUHLMANN**
**Service Propriété Industrielle Tour Manhattan**
**Cedex 21 F-92087 Paris La Defense 2 (FR)**

Courier Press, Leamington Spa, England.

Uranate de sodium sous forme de particules sphériques ayant une bonne coulabilité et son procédé d'obtention

La présente invention concerne un nouvel uranate de sodium sous forme de particules sphériques ayant une bonne coulabilité et son procédé d'obtention à partir de solutions uranifères. Le procédé de l'invention permet d'obtenir directement de l'uranate de sodium sous-forme de particules sphériques, de granulométrie bien déterminée, ayant une forte masse volumique apparente et une très bonne coulabilité; cette qualité d'uranate de sodium présente de ce fait une grande sécurité de manipulation en réduisant au minimum les émissions de poussières riches en uranium. Le procédé mis au point par la demanderesse a ainsi permis de résoudre un problème important pour les usines fabriquant les concentrés uranifères ou les utilisant dans les étapes ultérieures de la préparation des combustibles nucléaires, les procédés actuellement utilisés pour préparer l'uranate de sodium conduisant à un produit pulvérulent de manutention dangereuse.

Selon la technique actuelle d'extraction de l'uranium contenu dans les minerais uranifères, celui-ci est récupéré, après purification et concentration, sous forme de liqueurs acides ou alcalines. Les concentrés uranifères sont précipités à partir de ces solutions acides ou basiques en milieu $SO_4^{--}$ et/ou $CO_3^{--}$ en particulier par l'hydroxyde de sodium. La précipitation a lieu dans une série de cuves en cascades maintenue à 60—80°C. Il en résulte un précipité très fin d'uranate de sodium difficile à filtrer et à sécher et dont la granulométrie est comprise entre 0 et 15 $\mu$m. Ces particules ont une forme irrégulière et le produit obtenu présente une mauvaise coulabilité. La manipulation d'un tel produit engendre des problèmes d'hygiène et de sécurité dus à l'émission de poussières riches en uranium tant dans l'usine de fabrication du concentré uranifère, lors du séchage et de la mise en fût du solide, que dans les usines de raffinage qui reprennent ces concentrés uranifères pour les purifier et les transformer en oxyde, fluorure ou métal.

Diverses méthodes sont connues pour amener les substances cristallisées dans l'état physique exigé par l'utilisateur. La technique de l'agglomération de fines particules en lit fluidisé est une des plus efficaces. Elle consiste à former des agglomérats polycristallins à partir de fines particules injectées dans une solution du produit à cristalliser avec une sursaturation appropriée. Ces fines particules croissent et se soudent entre elles pour donner des agglomérats polycristallins possédant une granulométrie bien déterminée. Ces fines particules et ces agglomérats sont maintenus en suspension à l'aide d'un débit donné de solution sursaturée alimentée ou recyclée. L'état de sursaturation demeure constant par un apport continuel de substance à cristalliser. Cette technique a été décrite dans le FR—A—1.187.352 du 29 novembre 1957 de la demanderesse.

Si l'on applique cette technique de cristallisation en lit fluidisé à des solutions uranifères, elle ne conduit pas à la formation d'agglomérats polycristallins, mais il se produit une nucléation importante de très fines particules. Une forte dilution des solutions uranifères est un moyen d'abaisser la fréquence de nucléation de manière à obtenir des particules d'un diamètre suffisant. Mais industriellement, cette solution est difficilement applicable car il y a antagonisme entre les conditions nécessaires à une bonne fluidisation et celles correspondant à une productivité suffisante par unité de volume d'appareillage. De plus, la dilution ne peut être faite avec de l'eau qui alourdirait le bilan—eau du procédé, et la dilution habituelle par des eaux-mères comporte le risque d'une nucléation importante, car il y a toujours un excès d'hydroxyde de sodium dans les eaux-mères recyclables.

La présente invention donne le moyen de surmonter cette difficulté en permettant de traiter par la technique du lit fluidisé des solutions uranifères de concentrations comprises entre 1 et 40 g/litre en uranium. Toutes les solutions uranifères sont susceptibles d'être traitées selon ce procédé qui est particulièrement intéressant pour le traitement des solutions issues de l'attaque alcaline des minerais uranifères, et pour celui des solutions sodiques obtenues après purification par solvant ou par résine échangeuse d'ions, des jus issus de l'attaque acide ou alcaline des minerais.

Selon la présente invention, on ajoute à ces solutions uranifères, avant leur introduction dans le cristallisoir, des eaux-mères de cristallisation en un temps très bref inférieur à 2 secondes, à l'aide d'injecteurs appropriés, de façon à les amener à un titre en uranium de 0,5 à 5,18 g/l.

Lors de la neutralisation de la solution uranifère dans le lit fluidisé par l'hydroxyde de sodium, il y a apparition d'une certaine sursaturation en uranate de sodium. Si la solution uranifère est suffisamment diluée la nucléation sera faible et lente dans un milieu contenant 2 à 10 g/l de NaOH, teneur moyenne du lit fluidisé. Nous avons trouvé qu'il existe un très court temps de latence qui précède la nucléation et que ce temps de latence permet la dilution de la solution uranifère par des eaux-mères contenant 2 à 10 g/l de NaOH lors de l'introduction de ladite solution dans le lit fluidisé. Le solution ainsi diluée se répartit bien dans le lit fluidisé avant qu'une nucléation se produise sur les cristaux existant déjà dans le lit fluidisé et conduit à un grossissement régulier des particules.

La solution uranifère est alimentée en un ou plusieurs points du cristallisoir à lit fluidisé au moyen d'injecteurs appropriés permettant d'assurer un mélange très rapide de ladite solution avec un quantité d'eaux-mères variant selon la teneur initiale en uranium de la solution à cristalliser.

L'hydroxyde de sodium est introduit par de simples piquages en divers endroits du cristallisoir judicieusement choisis. La concentration des solutions d'hydroxyde de sodium peut être comprise entre 20 et 300 g/litre selon les cas.

Un apport contrôlé de fines particules d'uranate de sodium dans le lit fluide est nécessaire pour maintenir une production d'uranate de sodium ayant une granulométrie constante au cours du temps. Il peut être effectué de façon connue par addition d'une manière continue ou discontinue de très petits cristaux préparés séparément. Un autre aspect original de l'invention consiste en l'introduction dans le cristallisoir d'une certaine quantité de solution uranifère correspondant à·1 à 10% de l'uranium traité. Cette solution doit être suffisamment concentrée en uranium, 5 à 40 g/litre, pour qu'elle forme in situ les fines particules nécessaires au bon fonctionnement du lit fluidisé. L'appareil peut fonctionner ainsi d'une maînière autonome, sans faire appel à une source extérieure de fabrication de cristaux fins.

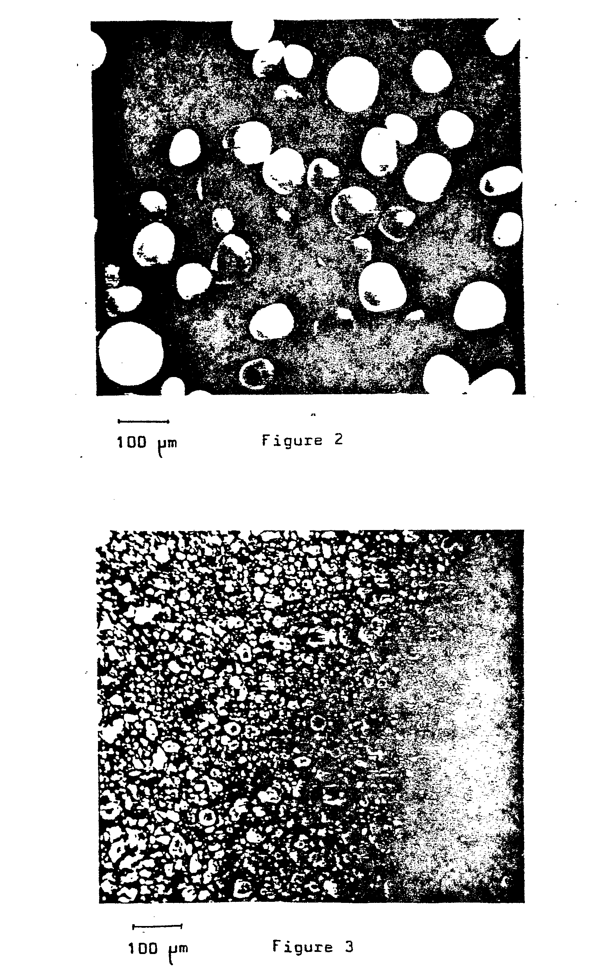

L'uranate de sodium obtenu selon l'invention se présente sous forme d'agglomérats sphériques et lisses, tels que ceux représentés à la fig. 2, de diamètre moyen compris entre 40 et 150 μm ce qui leur confère une grande coulabilité, et sa masse volumique apparente non tassée mesurée d'après les normes AF A 95— 111 de février 1977, est de 2,5 à 3,5 g/cm³. Lors de sa manipulation, il n'y a pas d'émission de fines particules très légères susceptibles de polluer l'atmosphère des locaux et d'incommoder les usagers. La coulabilité selon le test R. L. CARR décrit dans "Chemical Engineering" du 18 janvier 1965, page 163 a une valeur supérieure ou égale à 95 pour l'uranate de sodium obtenu selon l'invention, alors que l'uranate de sodium précipité dans une série de cuves en cascade selon le procédé habituel a seulement une coulabilité de l'ordre de 30.

Les exemples suivants illustrent l'invention de façon non limitative.

### Exemple 1 (Comparatif)

Dans un récipient de 1 litre du type Becher contenant 300 ml de solution uranifère à 37,6 g/l en uranium maintenue à 80°C dans lequel on a précédemment introduit 10 g d'uranate de sodium d'une opération précédente, on ajoute lentement en 40 mn, 291 ml d'une solution à 40 g/l en NaOH. Le contenu du bécher est constamment agité par un agitateur tournant à 150 tours/minute. Après filtration et séchage, l'uranate obtenu présente les caractéristiques suivants:

— granulométrie comprise entre 1 et 10 μm
— masse volumique non tassée=1,04 g/cm³
— coulabilité selon le test CARR: 33

Le produit ainsi obtenu qui correspond à ce que l'on obtient actuellement industriellement, présente la très fine granulométrie, la faible masse volumique et la mauvaise coulabilité qui rendent sa manutention difficile et dangereuse.

### Exemple 2 (Comparatif)

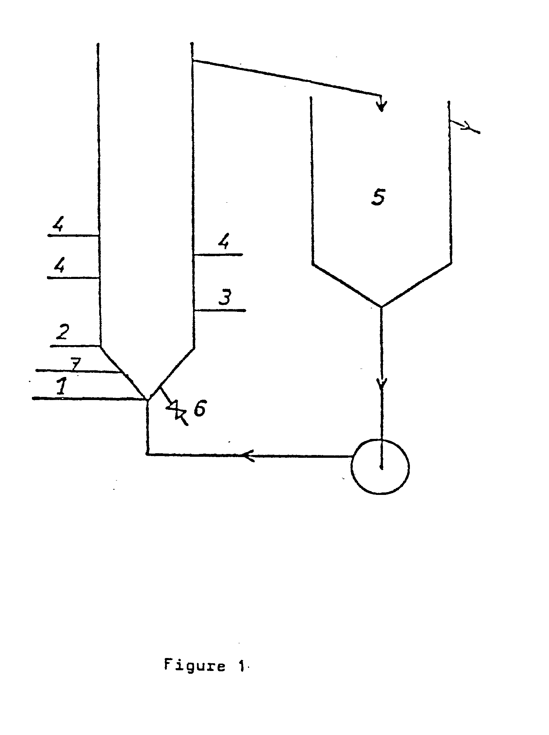

On prépare de l'uranate de sodium par la technique de cristallisation en lit fluidisé selon le procédé habituel. On fait circuler de bas en haut en circuit fermé dans une colonne cylindroconique de 0,08 m de diamètre et 0,6 m de hauteur des eaux-mères de cristallisation d'uranate de sodium à 80°C à un débit de 35 l/heure (figure 1). Ces eaux-mères contiennent, en plus des autres constituants 5 g/l de NaOH. On introduit par le piquage n° 1 situé dans le bas de la partie conique 0,64 l/heure d'une solution d'uranyle carbonate de sodium à 37,6 g/l d'uranium, 0,64 l/heure de la même solution sont répartis par les piquages 2 et 3. Par d'autres tubulures (4), on ajoute 1,35 l/heure d'une solution à 40 g/litre d'hydroxyde de sodium à 20°C. La production horaire d'uranium sous la forme d'uranate de sodium soutirée par le piquage 6 est de 48 g/h. Deux grammes/heure d'uranium sont ajoutés sous la forme de fines particules d'uranate de sodium, 0 à 10 μm, dans le décanteur (5) qui représentent environ 4% de la quantité d'uranium traité.

En régime l'agglomération est très faible et il se produit surtout une formation abondante de très fines particules dont le diamètre moyen est compris entre 1 et 20 μm. La forme de ces particules est irrégulière comme on peut le voir sur la fig. 3. La masse volumique apparente non tassée est égale à 1,5 g/cm³ et la coulabilité selon le test de CARR est de 38. Le produit obtenu est comme celui de l'exemple 1 de manutention difficile et dangereuse.

### Exemple 3

On opère comme dans l'exemple 2, mais on introduit le débit supplémentaire de 0,64 l/heure de solution uranifère par 2 injecteurs appropriés placés dans les tubulures 2 et 3. Dans chaque injecteur on ajoute 2 l/heure d'eaux-mères à 20—40°C contenant entre autres 5 g/l de NaOH. L'addition d'eaux-mères est effectuée en 0,7 sec. dans l'injecteur dont la cavité a été conçue à cet effet. Deux grammes d'uranium sous la forme de fines particules d'uranate de sodium sont ajoutés au lit fluide dans les mêmes conditions que dans l'exemple 2.

La répartition granulométrique des agglomérats obtenus à l'équilibre est le suivante en diamètre:

| $\varnothing > 100 \,\mu m$: | | 5% en poids |
|---|---|---|
| $75 < \varnothing < 100$ | : | 20% |
| $50 < \varnothing < 75$ | : | 60% |
| $40 < \varnothing < 50$ | : | 14,5% |
| $30 < \varnothing < 40$ | : | 0,5% |

La masse volumique apparente non tassée est de 3,12 g/cm³.

La coulabilité selon le test CARR est de 96, c'est-à-dire une valeur comparable à celle du sable sec. Comme on peut le voir sur la fig. 2, les agglomérats obtenus sont lisses et sphériques. L'absence de petites particules dans ces produits, leur densité élevée et leur bonne coulabilité font que leur manutention est aisée et non dangereuse.

## Exemple 4

On opère comme dans l'exemple 3, mais on introduit les 2 g/heure d'uranium sous la forme de 53 ml de solution uranifère à 37,6 g/l en uranium par l'intermédiaire du piquage n° 7 situé dans la partie conique du cristallisoir.

L'uranate de sodium obtenu présente sensiblement les mêmes spécifications que celles décrites dans l'exemple 3 et sa manutention est aisée et non dangereuse.

| $\varnothing > 100 \,\mu m$: | | 6% |
|---|---|---|
| $75 < \varnothing < 100$ | : | 22% |
| $50 < \varnothing < 75$ | : | 58% |
| $40 < \varnothing < 50$ | : | 13,7% |
| $30 < \varnothing < 40$ | : | 0,3% |

— Masse volumique apparente non tassée: 3,08 g/cm³
— Coulabilité selon le test de CARR: 95

## Exemple 5

On opère comme dans l'exemple 4 avec un débit plus important d'eaux-mères ajouté à celui de la solution uranifère à 37,6 g/l en uranium dans les injecteurs 2 et 3. Dans chaque injecteur 2 et 3, 0,32 l/h de solution uranifère à 37,6 g/l en uranium et 4 l/h d'eaux-mères à 20—40°C contenant 5 g/l de NaOH, sont introduits. Le mélange des eaux-mères et de la solution uranifère est effectué en 0,4 seconde dans l'injecteur dont la cavité a été conçue à cet effet.

L'uranate de sodium obtenu présente sensiblement les mêmes spécifications que celles décrites dans l'exemple 3.

## Exemple 6

On opère comme dans l'exemple 4 à partir d'une solution uranifère contenant 3 g/l en uranium. Le débit total de solution uranifère introduite dans le réacteur à lit fluidisé est de 16 l/h soit une productivité comparable aux exemples précédents. 8 l/h de solution uranifère à 3 g/l en uranium sont alimentés par le piquage n° 1. 8 l/h de la même solution sont également répartis par des injecteurs appropriés placés dans les tubulures 2 et 3. Dans chaque injecteur on ajoute 4 l/h d'eaux-mères à 20—40°C contenant entre autre 5 g/l de NaOH. Le mélange des eaux-mères et de la solution uranifère est effectué en 0,6 sec. dans l'injecteur dont la cavité est conçue à cet effet. 3 g/l de cristaux fins d'uranate de sodium, nécessaires au bon fonctionnement du lit fluidisé, sont formés au moyen d'un débit de 75 ml/h de solution uranifère à 30 g/l en uranium injecté par le piquage n° 7.

La répartition granulométrique des agglomérats obtenus est la suivante:

| $\varnothing > 100 \,\mu m$: | | 8,4% en poids |
|---|---|---|
| $75 < \varnothing < 100$ | : | 23,1% en poids |
| $50 < \varnothing < 75$ | : | 60,7% en poids |
| $40 < \varnothing < 50$ | : | 7,3% en poids |
| $30 < \varnothing < 40$ | : | 0,5% en poids |

— Masse volumique apparente non tassée: 3,13 g/cm³
— Coulabilité selon le test de CARR: 95

## Revendications

1. Uranate de sodium de manutention aisée caractérisé par la forme sphérique des grains, le diamètre moyen de ceux-ci compris entre 40 et 150 $\mu m$, leur masse volumique apparente non tassée de 2,5 à 3,5 g/cm³, et une coulabilité mesurée dans l'échelle CARR supérieure ou égale à 95.

2. Procédé de fabrication d'uranate de sodium selon la revendication 1 à partir de solutions uranifères titrant de 1 à 40 g/l en uranium par agglomération de cristaux fins d'uranate de sodium dans un cristallisoir où les cristaux sont maintenus à l'état de lit fluidisé par un mouvement ascendant continu d'une solution sursaturée du même uranate de sodium caractérisé par le fait que l'on ajoute à la solution uranifère de départ, avant son introduction dans le cristallisoir, des eaux-mères de cristallisation, en un temps très bref inférieur à 2 secondes, de façon à l'amener à un titre en uranium compris entre 0,5 et 5,18 g/l.

3. Procédé selon la revendication 2 où les cristaux fins d'uranate de sodium nécessaires au fonctionnement du procédé sont obtenus par introduction dans le cristallisoir d'une solution uranifère concentrée titrant 5 à 40 g/l d'uranium, en quantité correspondant à 1 à 10% de l'uranium traité.

## Claims

1. Sodium uranate which is easy to handle, characterised by the spherical shape of the particles, their average diameter of between 40 and 150 $\mu m$, their untapped bulk density of 2,5 to 3,5 g/cm³, and a flowability, measured on the CARR scale, which is greater than or equal to 95.

2. Process for the manufacture of sodium uranate according to Claim 1, from uraniferous solutions containing from 1 to 40 g/litre of uranium, by the agglomeration of fine crystals of sodium uranate in a crystalliser in which the crystals are kept in the fluidised bed state by the continuous ascending movement of a supersatured solution of the same sodium uranate, characterised in that mother liquors of crystallisation are added to the initial uraniferous solution, before it is introduced into the crystalliser, over a very short period of less than 2 seconds, so as to bring its uranium content to between 0,5 and 5.18 g/litre.

3. Process according to Claim 2, in which the fine crystals of sodium uranate required for the operation of the process are obtained by introducing a concentrated uraniferous solution, containing 5 to 40 g/litre of uranium, into the crystalliser in an amount corresponding to 1 to 10% of the uranium treated.

**Patentansprüche**

1. Leicht zu handhabendes Natriumuranat, gekennzeichnet durch eine Kugelform der Körner mit einem mittleren Durchmesser zwischen 40 und 150 µm, einer scheinbaren Dichte (ohne Zusammenpressen) von 2,5 bis 3,5 g/cm$^3$ und einer Fließfähigkeit, gemessen nach der Carr-Skala gleich oder größer 95.

2. Verfahren zur Herstellung von Natriumuranat nach Anspruch 1 aus uranhaltigen Lösungen mit einem Urangehalt von 1 bis 40 g/l durch Agglomerierung von feinen Natriumuranat-Kristallen in einem Kristallisator, in dem die Kristalle durch die stetig aufsteigende Bewegung einer gesättigten Lösung des gleichen Natriumuranats im Zustand eines Fluidbetts gehalten werden, dadurch gekennzeichnet, daß man der uranhaltigen Ausgangslösung vor ihrem Einleiten in den Kristallisator in einer sehr kurzen Zeit unter 2 Sekunden die Mutterlaugen der Kristallisation zugibt, um sie auf einen Urangehalt zwischen 0,5 und 5,18 g/l zu bringen.

3. Verfahren nach Anspruch 2, bei dem die feinen Natriumuranatkristalle, die für das Funktionieren des Verfahrens notwendig sind durch Zufuhr einer konzentrierten uranhaltigen Lösung mit 5 bis 40 g/l Uran in einer 1 bis 10% des behandelten Urans entsprechenden Menge in den Kristallisator erhalten werden.

Figure 1.

100 µm          Figure 2

100 µm          Figure 3